# EUROPÄISCHE PATENTSCHRIFT

(11) **EP 2 182 020 B1**
(45) Veröffentlichungstag und Bekanntmachung des Hinweises auf die Patenterteilung: **25.07.2018**
(21) Anmeldenummer: 09172824.6
(22) Anmeldetag: 13.10.2009
(51) Int. Cl.: C08G 77/46, C08L 83/12, B01F 17/00, D21H 21/24

(54) **SILIKONPOLYETHERBLOCK-COPOLYMERE MIT DEFINIERTER POLYDISPERSITÄT IM POLYOXYALKYLENTEIL UND DEREN VERWENDUNG ALS STABILISATOREN ZUR HERSTELLUNG VON POLYURETHANSCHÄUMEN**
SILICON POLYETHER BLOCK COPOLYMERS WITH DEFINED POLYDISPERSITY IN POLYOXYALKYLS SECTION AND USE OF SAME AS STABILISERS FOR PRODUCTION OF POLYURETHANE FOAMS
COPOLYMÈRES À BLOC DE SILICONE POLYÉTHER AYANT UNE POLYDISPERSION DÉFINIE DANS LA PART DE POLYOXYALKYLÈNE ET LEUR UTILISATION COMME STABILISATEURS DANS LA FABRICATION DE MOUSSES DE POLYURÉTHANE

(30) Priorität: 31.10.2008 DE 102008043343
(43) Veröffentlichungstag der Anmeldung: 05.05.2010
(73) Patentinhaber: Evonik Degussa GmbH, 45128 Essen (DE)
(72) Erfinder: Henning, Frauke, 45130, Essen (DE); Knott, Wilfried, 45355, Essen (DE); Schubert, Frank, 47506, Neukirchen-Vluyn (DE); Hubel, Roland, 45136, Essen (DE); Eilbracht, Christian, 44627, Herne (DE)

(56) Entgegenhaltungen:
- EP-A1- 0 867 462
- EP-A1- 1 892 327
- WO-A1-2007/127004
- WO-A1-2008/003470
- US-A1- 2002 091 219

## Beschreibung

Polyurethane unterschiedlicher Art werden durch die Polymerisation von Diisocyanaten wie 4,4'-Methylen-bis(phenylisocyanat), kurz MDI, oder 2,4-Toluoldiisocyanat, kurz TDI, mit Polyetherpolyolen oder Polyesterpolyolen hergestellt. Die hierbei eingesetzten Polyetherpolyole werden durch die Alkoxylierung von polyhydroxyfunktionellen Startern wie z.B. Glykolen, Glycerin, Trimethylolpropan, Pentaerythrit, Sorbit oder Saccharose gewonnen. Bei der Herstellung von Polyurethanschäumen kommen zusätzliche Treibmittel zum Einsatz, wie z. B. Pentan, Methylenchlorid oder Kohlendioxid. Unerlässlich für die reproduzierbare technische Herstellung von Schaumteilen ist die Stabilisierung des Polyurethanschaums durch ein Tensid. Abseits von wenigen rein organischen Tensiden werden aufgrund ihres höheren Grenzflächenstabilisierungspotentials meist Silikontenside eingesetzt.

### Stand der Technik:

Im Stand der Technik ist eine Vielzahl verschiedener Polyurethanschäume beschrieben, beispielsweise Heißweichschaum, Kaltschaum, Esterschaum, PUR-Hartschaum, PIR-Hartschaum uvm. Die hierbei eingesetzten Stabilisatoren sind auf die jeweilige Endanwendung passgenau entwickelt und zeigen üblicherweise eine deutlich veränderte Performance, falls sie zur Herstellung anderer Schaumarten benutzt werden.

Bei der Herstellung von Polyurethan- und Polyisocyanurat-Hartschaumstoffen werden zellstabilisierende Additive eingesetzt, um eine feinzellige, gleichmäßige und störungsarme Schaumstruktur zu erhalten und damit die Gebrauchseigenschaften - besonders das thermische Isolationsvermögen - des Hartschaumstoffes in wesentlichem Maße positiv zu beeinflussen. Auch hier sind Tenside auf der Basis von Polyether-modifizierten Siloxanen besonders effektiv und stellen daher den bevorzugten Typ der Zellstabilisatoren dar. Da es eine Vielzahl verschiedener Hartschaumformulierungen für unterschiedliche Anwendungsgebiete gibt, die individuelle Anforderungen an den Zellstabilisator stellen, werden Polyethersiloxane unterschiedlicher Struktur eingesetzt. So hat beispielsweise die Wahl des Treibmittels die Entwicklungen neuer, optimierter Stabilisatoren beeinflusst. Während die EP 0570174 A1 noch die Herstellung von Polyurethan-Hartschaum unter Verwendung von Fluorchlorkohlenwasserstoffen beschreibt, geht die weitere Entwicklung über reine Fluorkohlenwasserstoffe als Treibmittel, wie in der EP 0533202 A1 beschrieben bis hin zum heutzutage standardmäßig eingesetzten Treibmittel Pentan, wie in der EP 1544235 A1 beschrieben, hinaus.

Polyurethanweichschäume werden häufig unter Verwendung von Kohlenstoffdioxid als umweltfreundlichem Treibmittel hergestellt. Die EP 0797606 A1 und EP 1501889 A1 beschreiben die für diese Anwendung gebräuchlichen Stabilisatoren. In Ländern mit weniger strikten Umweltauflagen wird dennoch nach wie vor Methylenchlorid als Treibmittel verwendet. Die EP 0694585 A2 beschreibt hier im Einsatz befindliche Stabilisatoren.

Die EP 0600261 stellt auf Polysiloxan-Polyoxyalkylen-Blockmischpolymerisate ab, die unterschiedliche Polyoxyalkylenblöcke im durchschnittlichen Molekül aufweisen und Verwendung finden als Stabilisatoren für die Herstellung von flexiblen Polyurethanschäumen. Sehr genau umrissen wird nach der erfindungsgemäßen Lehre die Zusammmensetzung der im durchschnittlichen Silikonpolyether-Copolymer vertretenen Polyoxyalkylenreste im Hinblick auf deren durchschnittliche Molgewichte, deren Ethylenoxid/Propylenoxid-Verhältnis und deren individuellen, prozentualen Anteil in der Gesamtmatrix angelagerter Polyether.

Aus der EP 0 585 771 A2 geht hervor, dass die Polysiloxan-Polyoxyalkylen-Blockmischpolymerisate, die besonders leistungsfähige Schaumstabilisatoren darstellen, durch eine nur empirisch zu ermittelnde Kombination aus hydroxyfunktionellen und endverkappten Polyoxyalkylenblöcken unterschiedlichen Molekulargewichts und unterschiedlicher Hydrophilie bzw. Lipophilie gekennzeichnet sind. Erst ein genau abgestimmtes Verhältnis von hydrophilen, lipophilen und silikonophilen Polymerblöcken verleiht dem Stabilisator in der jeweiligen Anwendung seine optimale Wirkung. Die Erfahrung lehrt, dass rohstoffbedingte Schwankungen der hydrophilen, lipophilen und silikonophilen Anteile im Polysiloxan-Polyoxyalkylen-Blocpolymerisat eine schlechtere Kompatibilisierung des Schaumstabilisators mit der reagierenden Polyurethanmatrix bewirken können, was eine homogene Verteilung des Tensids und die anschließende Migration zur Grenzfläche derart behindern kann, dass ein Schaumkollaps die unmittelbare Folge ist.

In einem bisher noch nicht veröffentlichten Schutzrechtsersuchen DE 10 2007 055485.2 wird ein Verfahren zur Herstellung von in der Siloxankette verzweigten organomodifizierten Polysiloxanen, bei dem ein verzweigtes Polysiloxan mit endständigen und/oder seitenständigen SiH-Funktionen in nur einem Verfahrensschritt hergestellt und mit organischen Verbindungen weiter funktionalisiert wird, sowie nach diesem Verfahren hergestellte verzweigte organomodifizierte Polysiloxane und deren Verwendung beschrieben.

Die meisten Verfahren zur Herstellung von Alkoxylierungsprodukten (Polyethern) bedienen sich basischer Katalysatoren wie z.B. der Alkalihydroxide und der Alkalimethylate. Besonders verbreitet und seit vielen Jahren bekannt ist der Einsatz von KOH. Typischerweise wird ein meist niedermolekularer, dass bedeutet, mit einem Molekulargewicht von kleiner als 200 g/mol, hydroxy-funktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen bei dieser sogenannten Living-Polymerisation fördern verschiedene Nebenreaktionen. Durch Umlagerung von Propylenoxid in Allylalkohol, der seinerseits als Kettenstarter fungiert, und Kettenabbruchreaktionen entstehen Polyether mit relativ breiter Molmassenverteilung und ungesättigten Nebenprodukten. Eine dem Fachmann geläufige Methode der Jodzahl-Bestimmung ist die Methode nach Hanus, bekannt als Methode DGF C-V 11 a (53) der Deutschen Gesellschaft für Fette.
Die Jodzahl nach DGF C-V 11 a (53) gibt die Konzentration an Doppelbindungen in einer definierten Gewichtsmenge eines Stoffes an.

Zu den Nachteilen der basisch katalysierten Alkoxylierung zählt zweifelsfrei auch die Notwendigkeit, die erhaltenen Reaktionsprodukte mit Hilfe eines Neutralisationsschrittes von der aktiven Base zu befreien. Zwingend erforderlich sind dann die destillative Abtrennung des bei der Neutralisation entstehenden Wassers sowie die Abtrennung des gebildeten Salzes durch Filtration.

Neben der basenkatalysierten Reaktion sind auch saure Katalysen zur Alkoxylierung bekannt. So wird in DE 10 2004 007561 die Verwendung von HBF₄ und von LewisSäuren wie z.B. BF₃, AlCl₃ und SnCl₄ in der Alkoxylierungstechnologie beschrieben.

Nachteilig bei der säurekatalysierten Polyethersynthese erweist sich die mangelhafte Regioselektivität bei der Ringöffnung unsymmetrischer Oxirane wie z.B. Propylenoxid, die dazu führt, dass in nicht eindeutig zu steuernder Weise Polyoxyalkylenketten mit teils sekundären und primären OH-Termini erhalten werden. Wie im Falle der basenkatalysierten Alkoxylierungsreaktion ist auch hier eine Aufarbeitungssequenz von Neutralisation, Destillation und Filtration unabdingbar. Wird Ethylenoxid als Monomer in die säurekatalysierte Polyethersynthese eingebracht, so ist mit der Bildung von Dioxan als unerwünschtem Nebenprodukt zu rechnen.
Als Katalysatoren zur Herstellung von Polyetheralkoholen werden aber auch häufig Multimetallcyanidverbindungen oder Doppelmetallcyanid-Katalysatoren, allgemeingebräuchlich auch als DMC-Katalysatoren bezeichnet, eingesetzt. Durch den Einsatz von DMC-Katalysatoren wird der Gehalt an ungesättigten Nebenprodukten minimiert, außerdem verläuft die Umsetzung, verglichen mit den üblichen basischen Katalysatoren, mit einer deutlich höheren Raum-ZeitAusbeute. Die Herstellung und Verwendung von Doppelmetallcyanid-**Komplexen als** Alkoxylierungskatalysatoren ist seit den 1960er Jahren bekannt und wird zum Beispiel in US 3, 427, 256, US 3,427,334, US 3,427,335, US 3,278,457, US 3,278,458, US 3,278,459 dargestellt. Unter den in den Folgejahren weiter entwickelten und z.B. in US 5,470,813 und US 5,482,908 beschriebenen, immer wirksameren Typen von DMC-Katalysatoren befinden sich im speziellen Zink-Cobalt-Hexacyanokomplexe. Dank ihrer außerordentlich hohen Aktivität werden zur Herstellung von Polyetherolen nur geringe Katalysatorkonzentrationen benötigt, so dass auf die für konventionelle alkalische Katalysatoren notwendige Aufarbeitungsstufe - bestehend aus der Neutralisation, der Fällung und der Abfiltration des Katalysators - am Ende des Alkoxylierungsprozesses verzichtet werden kann. Die mit DMC-Katalysatoren hergestellten Alkoxylierungsprodukte zeichnen sich durch eine viel engere Molmassenverteilung im Vergleich zu alkalisch katalysierten Produkten aus. Auf die hohe Selektivität der DMC-katalysierten Alkoxylierung ist zurückzuführen, dass zum Beispiel Propylenoxid-basierende Polyether nur sehr geringe Anteile ungesättigter Nebenprodukte enthalten.

Die im unmittelbaren Vergleich mit Alkali- und Säurekatalyse an DMC-Katalysatoren durchgeführte Alkoxylierungsreaktion ist unter den beschriebenen technischen Eigenarten so vorteilhaft, dass sie zur Entwicklung kontinuierlicher Prozesse zur Herstellung volumenstarker einfacher, zumeist nur aus PO-Einheiten bestehender, Polyetherole geführt hat. So beschreibt WO 98/03571 ein Verfahren zur kontinuierlichen Herstellung von Polyetheralkoholen mittels DMC-Katalysatoren, bei dem in einem kontinuierlichen Rührkessel zunächst eine Mischung aus einem Starter und einem DMC-Katalysator vorgelegt, der Katalysator aktiviert und zu dieser aktivierten Mischung kontinuierlich weiterer Starter, Alkylenoxide und DMC-Katalysator gegeben und, nach Erreichen des angestrebten Füllstands des Reaktors, kontinuierlich Polyetheralkohol abgezogen wird.

In JP H6-16806 wird ein Verfahren zur kontinuierlichen Herstellung von Polyetheralkoholen mittels DMC-Katalysatoren ebenfalls in einem kontinuierlichen Rührkessel oder in einem Rohrreaktor beschrieben, bei dem eine aktivierte Startsubstanzmischung am Eingang vorgelegt und an verschiedenen Punkten des Rohrreaktors Alkylenoxid zudosiert wird.

Auch in DD 203 725 wird ein Verfahren zur kontinuierlichen Herstellung von Polyetheralkoholen mittels DMC-Katalysatoren beschrieben, bei dem in einem Rohrreaktor eine aktivierte Startsubstanzmischung am Eingang vorgelegt und an verschiedenen Punkten des Rohrreaktors Alkylenoxid zudosiert wird.

In WO 01/62826, WO 01/62824 und WO 01/62825 werden spezielle Reaktoren für das kontinuierliche Verfahren zur Herstellung von Polyetheralkoholen mittels DMC-Katalysatoren beschrieben.
Die Patentliteratur stellt bei den hier beschriebenen technischen Verfahren insbesondere auf die Monodispersität des nach DMC-Verfahren gewonnenen Polyetherols ab. So sind enge Molmassenverteilungen oft wünschenswert, wie im Falle der für PU-Verschäumungssysteme genutzten Polyole (DE 100 08630, US 5,689,012).

Wie in US 5,856,369 und US 5,877,268 dargelegt, führt die hohe chemische Reinheit und die hohe Molmasse in Kombination mit geringer Polydispersität der mittels DMC-Katalysatoren hergestellten ungesättigten Polyetherole zu hochaktiven Polyurethanschaumstabilisatoren. Die Anwendbarkeit der beschriebenen meist Allylalkoholgestarteten Polyetherole auf dem Gebiet der PU-Schaumstabilisatoren beschränkt sich jedoch auf eine relativ kleine Gruppe von Polyetherolen, die aus Ethylenoxid- und Propylenoxid-Monomereinheiten in teils statistisch gemischter Abfolge bestehen und in denen der Ethylenoxidanteil nicht über 60 mol-% betragen darf, um die Entstehung von Polyethylenglykol-Blöcken in der Polymerkette zu vermeiden. Zur Verbesserung der Löslichkeit und damit der Wirksamkeit der Stabilisatoren sowie auch zur Verstärkung der zellöffnenden Wirkung müssen die in der US 5856369 offenbarten, nur 40% Ethylenoxid enthaltenden hochmolekularen Allylpolyether in Kombination mit einem molaren Überschuss an hydrophilen Allylpolyethylenglykolen eingesetzt werden. Diese Einschränkung limitiert die universelle Verwendbarkeit der höhermolekularen Polyether und die Synthese kann durch auftretende Inkompatibilitäten Schwankungen unterworfen sein, die zu abweichender Produktperformance oder gar zu Trübungen und Phasenseparation (vgl. Copolymer 21 in der US 5856369) führen können.
Neben der universellen Einsetzbarkeit in verschiedenen Formulierungen ist zudem das Verarbeitungsspiel ein wichtiger Faktor für die Güte eines Stabilisators. Ein breites Verarbeitungsspiel bedeutet, dass die Schaumeigenschaften bei Dosageschwankungen der Edukte konstant bleiben. Das Verarbeitungsspiel kann ermittelt werden, indem die Einsatzmengen von Stabilisator und Katalysator variiert werden. Wie dem Fachmann bekannt weisen hochaktive Stabilisatoren, wie beispielsweise die in US 5,856,369 und US 5,877,268 beschriebenen Silikonpolyethercopolymeren, meist ein zu kleines Verarbeitungsspiel auf. Die Patentschriften US 5,856,369 und US 5,877,268 belegen, dass die Verwendung besonders langkettiger Polyether im Polyoxyalkylenteil des Silikonpolyethercopolymer zu höherviskosen Produkten führt, die erst mit Lösungsmitteln abgedünnt werden müssen, um eine normale Handhabung zu gewährleisten.

Die Substitution der nach gängiger alkalischer Katalyse hergestellten Polyetherole durch solche, die nach DMC-Katalyse synthetisiert werden, liefert somit andersartige Alkoxylierungsprodukte deren Verwendbarkeit als Copolymerkomponenten in PU-bewährten, etablierten Silikonpolyethercopolymeren nur eingeschränkt gegeben ist.

Zur Angleichung der mittels DMC-Katalysatoren hergestellten Polyether an die nach gängiger alkalischer Katalyse hergestellten Polyetherole im Sinne einer erleichterten Substituierbarkeit lehrt die DE 10 2007 057145.5 ein Verfahren zur Steuerung der Molmassenverteilung in der Alkoxylierung von Hydroxylverbindungen mit Epoxidmonomeren mittels Doppelmetallcyanid-Katalysatoren unter Einsatz spezieller Wasserstoffsiloxane und Silane als Additive, die mindestens ein direkt am Siliciumatom gebundenes hydridisches Wasserstoffatom aufweisen. Diese Schrift belegt jedoch nicht die Tauglichkeit der unter Erhöhung der Polydispersität hergestellten Polyetherverbindungen als Copolymerkomponente in Silikonpolyethern, weder in solchen des in der Siloxankette verzweigten Typs noch in solchen des linearen, seitständig modifizierten Typs z.B. für Polyurethanweichschaumsysteme.

Es bestand die technische Aufgabe, universell einsetzbare Silikonpolyetherblock-Copolymere mit einem ausgewogenen Eigenschaftsprofil hinsichtlich ihrer Verarbeitbarkeit und Formulierbarkeit und einem breiten Verarbeitungsspiel herzustellen, deren Leistungsfähigkeit mit der etablierter Silikonpolyether-Copolymeren vergleichbar und/oder sogar überlegen ist.
Überraschenderweise wurde nun gefunden, dass die erfindungsgemäße Aufgabe dadurch gelöst wird, dass man verzweigte Polysiloxane mit endständigen und/oder seitenständigen SiH-Funktionen in nur einem Verfahrensschritt hergestellt oder lineare Polysiloxane mit seitenständigen und/oder endständigen SiH-Funktionen mit Polyethern bzw. Polyethergemischen organomodifiziert, wobei die einzelnen Allylpolyether der Mischung eine Polydispersität M_{w}/Mₙ zwischen 1,0 und 1,5 aufweisen und deren Quotienten Mₙ/MG_{JZ} und M_{w}/MG_{JZ} im Bereich von 0,7 bis 1,3 liegen.
Da die Neutralisation sowie auch eine mögliche anschließende Methylierung oder Acetylierung eines Allylpolyethers dazu führen kann, dass sich ungesättigte Nebenprodukte auf- oder abbauen, steht die Jodzahl eines Allylpolyethers in keinem direkten Zusammenhang zu seiner Polydispersität.
Unter der Annahme dass jede allylgestartete Polyetherkette nur eine Doppelbindung enthält, lässt sich aus der Jodzahl das durchschnittliche Molgewicht des Polyethers berechnen. Erhöht sich der Anteil an ungesättigten Nebenprodukten im Polyether, so steigt die Jodzahl ebenfalls. Insbesondere mit Allylalkohol als Startalkohol bringt die unter alkalischer Katalyse durchgeführte Alkoxylierungsreaktion auch Propenylpolyether hervor. Diese Propenylpolyether erweisen sich bei der hydrosilylierenden Weiterverarbeitung zu über SiC-Bindungen verknüpften Silikonpolyether-Copolymeren als unreaktive Beiprodukte und sind zudem - durch die hydrolytische Labilität der in ihnen enthaltenen Vinyletherbindung und Freisetzung von Propionaldehyd - unerwünschte Quelle olfaktorischer Produktbelastungen. Dies ist beispielsweise in der EP 1 431 331 A1 beschrieben.

Somit ist die Jodzahl einerseits ein Indiz für die Zahl der hydrosilylierbaren Ketten in der Gesamtzusammensetzung des Polyethers, während andererseits die Polydispersität die Kettenlängenverteilung in der Gesamtzusammensetzung widerspiegelt unabhängig davon, ob diese Ketten hydrosilysierbar sind oder nicht.

**Damit konnte** übe rraschenderweise ein Unterscheidungskriterium aufgefunden werden, dass die Verwendbarbeit von Allylpolyethern zur Herstellung von technisch vorteilhaften Polyurethanschaumstabilisatoren voraussagbar macht.

Gemäß der Lehre der US 5,856,369 und US 5,877,268 sind geringe molare Anteile von häufig unter 10 mol% und nicht mehr als 33 mol% hochmolekularer hydrosilylierbarer Allylpolyether (MW größer 5000 g/mol oder sogar 7000 g/mol) in einer Gesamt-Polyetherzusammensetzung mit Mischungsmolgewichten von 1100 bis 3000 g/mol zielführend für die Herstellung von Polyurethanschaumstabilisatoren. Bedingt durch den Anteil des hochmolekularen Allylpolyethers besteht hier die Notwendigkeit die Abmischung mit einem sehr kurzkettigen, niedermolekularen Polyether mit nur 500-800 g/mol durchzuführen, was Inhomogenitäten und Inkompatibilitätsprobleme aufkommen lässt.
Im Gegensatz zu dieser Lehre steht die hier offenbarte erfinderische Beobachtung darin, dass das Molgewicht der Polyether allein kein ausreichendes Kriterium darstellt und auch größere molare Anteile von über 16 mol% und insbesondere über 35 mol% höhermolekularer Polyether in eine Rezeptur eingebracht werden können, sofern diese Polyether die Kriterien bezüglich des Quotienten zwischen Mₙ bzw. M_{w} und der Jodzahl erfüllen.
Damit können auch molekulargewichts-"ähnliche" Polyether erfolgversprechend zu Polyurethanschaumstabilisatoren umgesetzt werden. Bevorzugt enthält die erfindungsgemäße Polyetherabmischung für die Herstellung von Polyurethanheißweichschaumstabilisatoren mindestens 16 mol% und insbesondere mindestens 35 mol% der höhermolekularen Komponente mit einem durchschnittlichen Molgewicht von größer oder gleich 3000 g/mol.

Für den Fachmann überraschend und keinesfalls vorhersehbar erweist sich die Modifikation eines Silikongerüstes mit einem Polyether- bzw. einer Polyetherkombination nur dann im Sinne der angestrebten Schaumstabilisatorwirkung z.B. in Polyurethan-Heißweichschaumsystemen als Ziel führend, wenn alle verwendeten Allylpolyether eine Molmassenverbreiterung aufweisen, die im Bereich von 1,0 bis 1,5 liegt und zusätzlich den Quotienten Mₙ/MG_{JZ} und M_{w}/MG_{JZ} der verwendeten Polyether im Bereich von 0,7 bis 1,3 genügen. Im Sinne dieser erfindungsgemäßen Lehre sind die verwendeten Polyether nicht nur im Hinblick auf deren durchschnittliche Molgewichte, deren Ethylenoxid/ Propylenoxid-Verhältnis und deren individuellen, prozentualen Anteil in der Gesamtmatrix angelagerter Polyether, sondern auch im Hinblick auf deren Polydispersität auszusuchen. So ist die Polydispersität; d.h. das Maß der Molmassenverbreiterung bei Polyoxyalkylenverbindungen ganz wesentlich von der Art der Katalyse und der Reaktionsparameter bei deren Herstellung abhängig und bestimmt.

Gegenstand der Erfindung sind Silikonpolyether-Copolymeren gemäß Formel (I) 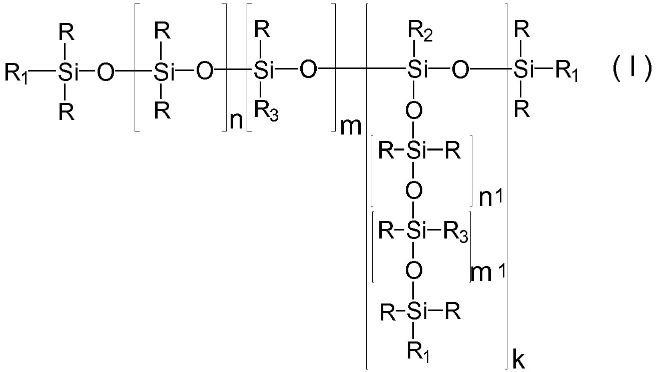 worin
n und n¹ unabhängig voneinander 0 bis 500, vorzugsweise 10 bis 200, insbesondere 15 bis 100 sind und (n+n¹) < 500, vorzugsweise < 200, insbesondere < 100 ist,
m und m¹ unabhängig voneinander 0 bis 60, vorzugsweise 0 bis 30, insbesondere 0,1 bis 25 sind und (m+m¹) < 60, vorzugsweise < 30, insbesondere < 25 ist,
k 0 bis 50, vorzugsweise 0 bis 10 ist, insbesondere von 1 bis 7,
R mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise ein Methylrest ist, wobei besonders bevorzugt alle Reste R Methylreste sind,
R₁ R oder R₃ ist,
R₂ R oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
R₃ R und/oder

   CH₂-CH₂-CH₂-O-(CH₂-CH₂O-)ₓ-(CH₂-CH(R')O-)_{y}-(SO)_{z}-R"

   CH₂-CH₂-O-(CH₂-CH₂O-)ₓ-(CH₂-CH(R')O-)_{y}-R"

   CH₂-R^{IV}

   CH₂-CH₂-(O)_{x'}-R^{IV}

   CH₂-CH₂-CH₂-O-CH₂-CH(OH)-CH₂OH

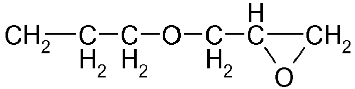

   CH₂-CH₂-CH₂-O-CH₂-C(CH₂OH)₂-CH₂-CH₃

   ist, worin
   x = 0 bis 100, vorzugsweise 0 bis 50,
   x' = 0 oder 1,
   y = 0 bis 100, vorzugsweise 0 bis 50,
   z = 0 bis 100, vorzugsweise 0 bis 10,
   R' eine gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen ist und
   R" einen Wasserstoffrest oder eine Alkylgruppe mit 1 bis 4 C-Atomen, eine Gruppe -C(O)-R''' mit R" = Alkylrest, eine Gruppe -CH₂-O-R', eine Alkylarylgruppe, wie z. B. eine Benzylgruppe, die Gruppe -C(O)NH-R' bedeutet,
   R^{IV} ein gegebenenfalls substituierter, z. B. mit Halogenen substituierter, Kohlenwasserstoffrest mit 1 bis 50, vorzugsweise 9 bis 45, bevorzugt 13 bis 37 C-Atomen ist,
   SO ein Styroloxid-Rest -CH(C₆H₅)-CH₂-O- ist,
   mit der Maßgabe, dass mindestens ein Substituent aus R₁, R₂ und R₃ nicht R ist und dass mindestens ein Substituent aus R₁, R₂ und R₃ ein Polyether mit einer Polydispersität M_{w}/Mₙ im Bereich von 1,0 bis 1,5 ist und deren Quotienten Mₙ/MG_{JZ} und M_{w}/MG_{JZ} im Bereich von 0,7 bis 1,3 liegt. Die verschiedenen Monomereinheiten der Siloxankette und auch der Polyoxyalkylenkette können untereinander blockweise aufgebaut sein oder einer statistischen Verteilung unterliegen.
Besonders bevorzugt sind Silikonpolyether-Copolymere gemäß Formel (I) in denen k gleich 1 bis 7 und R₁ ungleich R ist.
Die in den hier angeführten Formeln wiedergegebenen Indexzahlen und die Wertbereiche der angegebenen Indices verstehen sich daher als die Mittelwerte der möglichen statistischen Verteilung der tatsächlichen isolierten Strukturen und/oder deren Mischungen.
Gegenstand der Erfindung sind weiterhin Zusammensetzungen oder Mischungen der erfindungsgemäßen Silikonpolyether-Copolymeren gemäß Formel (I) untereinander und Mischungen der erfindungsgemäßen Schaumstabilisatoren mit weiteren Additiven, wie beispielsweise Nukleierungsmitteln, das sind zellverfeinernde Additive, Zellöffnern, Vernetzern, Emulgatoren, Flammschutzmitteln, Antioxidantien, Antistatika, Bioziden, Farbpasten, festen Füllstoffen und/oder ferner mit Aminkatalysatoren, Metallkatalysatoren und/oder Puffersubstanzen.
Die erfindungsgemäßen Silikonpolyetherblock-Copolymeren gemäß Formel (I) eignen sich insbesondere als Polyurethanschaumstabilisatoren in den Anwendungsbereichen wie beispielsweise PolyurethanWeichschaum, viscoelastischer Weichschaum, -Hartschaum, -Kaltschaum, -Esterschaum oder auch High Resilience-Schaum (HR-Schaum).

Die unter Verwendung der erfindungsgemäßen Silikonpolyetherblock-Copolymeren hergestellten Polyurethanschäume eignen sich besonders beispielsweise zur Herstellung von Polymerartikeln enthaltend Polyurethanschäume wie Möbelpolstern, Kühlschrankisolierungen, Sprühschäumen oder auch Metallverbundelementen für die (Bau-) Isolierung, aber auch von Polymerartikeln, die weitgehend nur aus dem Polyurethanschaum bestehen, wie Matratzen oder Autositzen; die Auflistungen sind als überlappend anzusehen und als nicht abschließend zu verstehen.

Ebenfalls Gegenstand der Erfindung sind Abmischungen oder Zusammensetzungen der erfindungsgemäßen Silikonpolyether-Copolymeren gemäß Formel (I) mit Lösungsmitteln, wie beispielsweise Glykolen, Alkoxylaten, Carbonaten, Ethern, Estern, verzweigten und linearen aliphatischen und aromatischen Kohlenwasserstoffen oder Ölen synthetischer und/oder natürlicher Herkunft.

Die der Erfindung zugrunde liegenden Polysiloxan-Polyoxyalkylen-Blockmischpolymerisate können **durch** edelmetallkatalysierte Hydrosilylierung der linearen oder verzweigten Wasserstoffsiloxane der Formel (II) mit Allylpolyethern, wie beispielsweise in der EP 1 520 870 beschrieben hergestellt werden, 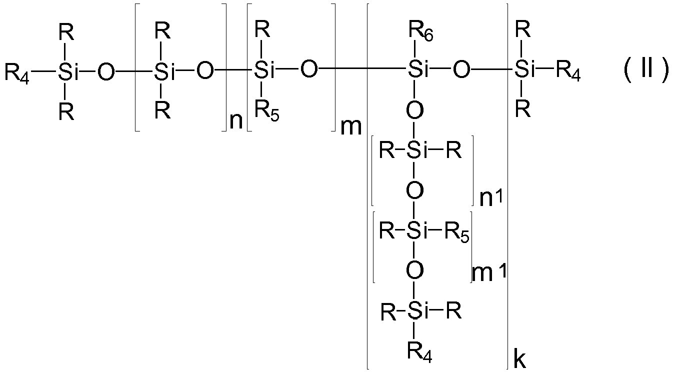 worin
n und n¹ unabhängig voneinander 0 bis 500, vorzugsweise 10 bis 200, insbesondere 15 bis 100 sind und (n+n¹) < 500, vorzugsweise < 200, insbesondere < 100 ist,
m und m¹ unabhängig voneinander 0 bis 60, vorzugsweise 0 bis 30, insbesondere 0,1 bis 25 sind und (m+m¹) < 60, vorzugsweise < 30, insbesondere < 25 ist,
k 0 bis 50, vorzugsweise 0 bis 10 und insbesondere 1 bis 7 ist,
R mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise ein Methylrest ist, wobei besonders bevorzugt alle Reste R Methylreste sind,
R₄ unabhängig voneinander Wasserstoff oder R ist,
R₅ unabhängig voneinander Wasserstoff oder R ist,
R₆ unabhängig voneinander Wasserstoff, R oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
mit der Maßgabe, dass mindestens ein Substituent aus R₄, R₅ und R₆ nicht R ist.

Die bei der Herstellung der Polysiloxan-Polyoxyalkylen-Blockmischpolymerisate verwendeten Wasserstoffsiloxane können ebenfalls wie im Stand der Technik, beispielsweise in der EP 1439200 B1 und in der noch unveröffentlichten Patentanmeldung DE 10 2007 055485.2 beschrieben, hergestellt werden. Die verwendeten ungesättigten Polyoxyalkylene können nach dem literaturbekannten Verfahren der alkalischen Alkoxylierung von Allylalkohol oder unter Verwendung von DMC-Katalysatoren wie im Stand der Technik, beispielsweise in der DE 10 2007 057145.5 beschrieben, hergestellt werden.

Die Herstellung der erfindungsgemäßen Polyurethanschäume kann mit im Stand der Technik bekannten Formulierungen und Verfahrensweisen mit jeweils parallel hergestellten Schäumen unter Zusatz etablierter Schaumstabilisatoren als Referenz erfolgen.

Der Polyurethanschaum kann in Kombination mit Wasser, Methylenchlorid, Pentan, Alkanen, halogenierten Alkanen, Aceton oder Kohlendioxid als bevorzugt physikalisch wirksamen Treibmitteln hergestellt werden.

Weitere Gegenstände der Erfindung sind gekennzeichnet durch die Inhalte der Ansprüche, deren Inhalt vollumfänglich Teil des Offenbarungsgehalts der vorliegenden Beschreibung ist.

Die erfindungsgemäßen Schaumstabilisatoren und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

### Beispiele:

In den Beispielen werden Wasserstoffsiloxane gemäß der Formel (II) des linearen Typs, S1, und des verzweigten Typs, S2, S3 und S4, eingesetzt:

**Tabelle 1:**

| Siloxan | R | R₄ | R₅ | R₆ | n+n1 | m+m1 | k |
|---|---|---|---|---|---|---|---|
| S1 | CH₃ | CH₃ | H | CH₃ | 71 | 7 | 0 |
| S2 | CH₃ | H | CH₃ | CH₃ | 64 | 0 | 7* |
| S3 | CH₃ | H | CH₃ | CH₃ | 64 | 0 | 5* |
| S4 | CH₃ | H CH₃ (1:1) | H | CH₃ | 64,5 | 3,5 | 5* |

| | | | | | | | |
|---|---|---|---|---|---|---|---|
| *Der hier angegebene theoretische Verzweigungsgrad k ist aus den Edukteinwaagen abgeleitet. Wie der DE 10 2007 055485.2 zu entnehmen ist, können die gemessenen Verzweigungsgrade kᵣₑₐₗ bedingt durch die analytische Genauigkeit der ²⁹Si-NMR-Messung als auch bedingt durch Prozess-Schwankungen bei der Herstellung um bis zu 30 % von den theoretischen Verzweigungsgraden abweichen. | | | | | | | |

Die eingesetzten Polyether (abgekürzt in Tabelle 2 mit PE) besitzen an den Kettenenden jeweils eine Allyletherfunktion und eine Methyletherfunktion und sind gekennzeichnet durch unterschiedliche EO/PO-Gewichtsanteile, Molgewichte und Polydispersitäten. GPC-Messungen zur Bestimmung der Polydispersität und mittleren Molmassen wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.
Die Jodzahlen [g Jod/100 g Probe] wurden nach der Methode nach Hanus, bekannt als Methode DGF C-V 11 a (53) der Deutschen Gesellschaft für Fette, bestimmt und in die Molmassen MG_{JZ} der jeweiligen Polyether umgerechnet.

**Tabelle 2:**

| PE | Gew.% PO | Gew.% EO | Mₙ g/mol | M_{w} g/mol | M_{w}/Mₙ | MG_{JZ} g/mol | Mₙ/MG_{JZ} | M_{w}/MG_{JZ} |
|---|---|---|---|---|---|---|---|---|
| 1A | 26 | 74 | 779 | 854 | 1,10 | 875 | 0,89 | 0, 98 |
| 1B | 26 | 74 | 863 | 964 | 1,12 | 947 | 0,91 | 1,02 |
| 1C | 26 | 74 | 870 | 918 | 1,05 | 957 | 0,91 | 0,96 |
| 2A | 58 | 42 | 1266 | 1398 | 1,10 | 1418 | 0,89 | 0,99 |
| 2B | 58 | 42 | 1420 | 1692 | 1,19 | 1519 | 0,93 | 1,11 |
| 2C | 58 | 42 | 1433 | 1554 | 1,08 | 1637 | 0,88 | 0,95 |
| 3A | 58 | 42 | 2990 | 3737 | 1,25 | 3678 | 0,81 | 1,02 |
| 3B | 58 | 42 | 3585 | 6157 | 1,72 | 4028 | 0,89 | 1,53 |
| 3C | 58 | 42 | 3864 | 4233 | 1,10 | 4028 | 0,96 | 1,05 |
| 3D | 58 | 42 | 4160 | 4854 | 1,17 | 3904 | 1,06 | 1,24 |
| 3E | 58 | 42 | 3575 | 4970 | 1,39 | 3853 | 0,93 | 1,29 |

Die erfindungsgemäßen polyethermodifizierten Siloxane werden mittels Hydrosilylierung nach immer gleichem Verfahren hergestellt. Es werden immer jeweils drei Polyether, nämlich ein niedermolekularer des Typs 1A-1C, ein höhermolekularer des Typs 2A-2C und ein hochmolekularer des Typs 3A-3E in einem konstanten molaren Verhältnis auf Basis von MG_{JZ} zueinander an die Wasserstoffsiloxane durch eine SiC-Bindung geknüpft. Das konstante molare Verhältnis beträgt 35 Anteile des Typs 1A-1C, 20 Anteile des Typs 2A-2C und 45 Anteile des Typs 3A-3E. Die Variation zwischen den Produkten auf Basis eines Siloxans besteht lediglich in der Polydispersität des Allylpolyethers. Man erhält Produkte mit Viskositäten im Bereich von 1400 bis 5000 mPa*s.

**Tabelle 3:**

| Beispiel | eingesetztes Siloxan | eingesetzte Polyether | Aussehen | Viskosität mPa*s |
|---|---|---|---|---|
| 1 | S1 | 1A / 2A / 3A | klar | 2535 |
| 2 | S2 | 1A / 2A / 3A | klar | 1525 |
| 3 | S1 | 2B / 2B / 3B | trüb | 4665 |
| 4 | S2 | 2B / 2B / 3B | trüb | 2737 |
| 5 | S1 | 1C / 2C / 3C | leicht trüb | 3518 |
| 6 | S2 | 1C / 2C / 3C | leicht trüb | 2404 |
| 7 | S2 | 1A / 2A / 3D | klar | 2652 |
| 8 | S2 | 1A / 2A / 3B | leicht trüb | 2997 |
| 9 | S2 | 1A / 2A / 3E | leicht trüb | 2036 |
| 10 | S3 | 1A / 2A / 3A | klar | 1340 |
| 11 | S4 | 1A / 2A / 3A | klar | 1499 |
| 12 | Mischung aus 50% Bsp. 1 und 50% Bsp. 2 | | klar | |

Die erfindungsgemäßen Polyorganosiloxane eignen sich für die Anwendung als Schaumstabilisator bei Polyurethan-Weichschaumstoffen, wie ein anwendungstechnischer Vergleich mit konventionellen Polyethersiloxanen, welche den Stand der Technik darstellen, zeigt. Eine typische Formulierung zur Herstellung von Polyurethan-Weichschaumstoffen basiert auf einem oder mehreren organischen Isocyanaten mit zwei oder mehr Isocyanat-Funktionen, einem oder mehreren Polyolen mit zwei oder mehr gegenüber Isocyanat reaktiven Gruppen, Katalysatoren für die Reaktionen Isocyanat-Polyol und/oder Isocyanat-Wasser und/oder die Isocyanat-Trimerisierung, Polyethersiloxan-Schaumstabilisatoren, Wasser, optional physikalischen Treibmitteln, optionalen Flammschutzmitteln und ggf. weiteren Additiven.

Für den anwendungstechnischen Vergleich von erfindungsgemäßen und konventionellen Schaumstabilisatoren wurde ein Polyurethanweichschaum in einer 27 cm x 27 cm großen offenen Holzkiste mit einer Wandhöhe von 27 cm durch Verschäumung einer Polyurethanformulierung mit folgenden Bestandteilen produziert:

| | |
|---|---|
| 100 Teile | trifunktionelles Polypropylenglykol, Desmophen VPPU 20 WB 01 von Bayer Material Science AG |
| 5,0 Teile | Wasser |
| 0,15 Teile | Aminkatalysator*1 |
| 0,23 Teile | Zinn-Katalysator*2 |
| 5,0 Teile | eines physikalischen Treibmittels (Dichlormethan) |
| 0,8 Teile | |
| bzw. 1,0 Teile | Schaumstabilisator und Toluylendiisocyanat Index 115 (TDI 80/20) von Bayer Material Science AG. |

| | |
|---|---|
| *1 TEGOAMIN®33, erhältlich bei der Firma Evonik Goldschmidt GmbH, hierbei handelt es sich um eine 33%ige Lösung von Triethylendiamin in Dipropylenglykol *2 KOSMOS®29, erhältlich bei der Firma Evonik Goldschmidt GmbH, hierbei handelt es sich um das Zinn-II-Salz der Ethylhexansäure. | |

Hierbei werden die erfindungsgemäßen Schaumstabilisatoren aus den Beispielen 1 bis 10 eingesetzt. Als Referenz dient Tegostab BF 2270. Die wichtigste Eigenschaft der erfindungsgemäßen Polyethersiloxane ist ihre Fähigkeit, den aufsteigenden Polyurethanschaum so zu stabilisieren, dass die noch weiche Polymermasse vor dem Aushärten nicht in sich zusammenfällt. Die Stabilisierungseigenschaft wird anhand des Rücksackens des Schaumstoffs nach dem Ende der Steigphase beurteilt und ist der Maßstab für den Vergleich der Stabilisatoren untereinander. Weitere gewünschte Eigenschaften wie beispielsweise eine hohe Zellfeinheit und offene, regelmäßige Zellstruktur des Schaums können formulierungstechnisch gemäß dem Stand der Technik, wie beispielsweise in der EP 1211279 A1 oder der EP 0930324 A1 beschrieben ist, durch die Zugabe von Zellöffnern und/oder Nukleierungsmitteln erzielt werden. Die nachfolgenden Beispiele berücksichtigen die Zellfeinheit ausdrücklich nicht, sondern fokussieren sich auf die Stabilisatoraktivität und die Offenzelligkeit, die im Folgenden auch als Porosität bezeichnet wird. Die in den Beispielen gemessenen Zellfeinheiten liegen zwischen 4 und 8 Zellen/cm und können durch Zugabe eines geeigneten Nukleierungsmittels bei der Verschäumung auf 12 Zellen/cm erhöht werden.

Die hergestellten Schäume wurden anhand folgender physikalischer Eigenschaften beurteilt:
1) Rücksacken des Schaumstoffes nach dem Ende der Steigphase (=Rückfall).
2) Raumgewicht (RG)
3) Die Porosität, also die Luftdurchlässigkeit, des Schaums wurde durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen.

Es wurden folgende Ergebnisse erhalten:

**Tabelle 4:**

| 0,8 Teile Stabilisator | Rückfall [cm] | Raumgewicht [kg/m³] | Porosität [mm Wassersäule] |
|---|---|---|---|
| Tegostab BF 2270 | -0,8 | 17,9 | 46 |
| Beispiel 1 | -0,0 | 17,4 | 151 |
| Beispiel 2 | -2,2 | 18,5 | 12 |
| Beispiel 3 | Kollaps | - | - |
| Beispiel 4 | -5,4 | 20,1 | 8 |
| Beispiel 5 | +0,8 | 17,1 | 241 |
| Beispiel 6 | -2,4 | 18,6 | 15 |
| Beispiel 7 | -3,3 | nicht bestimmt | 8 |
| Beispiel 8 | -4,5 | nicht bestimmt | 5 |
| Beispiel 9 | -2,5 | nicht bestimmt | 9 |
| 0,6 Teile Stabilisator | Rückfall [cm] | Raumgewicht [kg/m³] | Porosität [mm Wassersäule] |
| Beispiel 10 | -2,4 | 18,75 | 9 |
| Beispiel 11 | -1,0 | nicht bestimmt | 15 |

Aus den Ergebnissen der Tabelle 4 wird deutlich, dass die nicht erfindungsgemäßen Beispiele 3, 4, und 8, die einen Polyether mit einer Polydispersität von > 1,5 und/oder einem Quotienten M_{w}/MG_{JZ} > 1,3 enthalten, die höchsten Rückfälle und damit die geringste Fähigkeit zur Schaumstabilisierung aufweisen. Weiterhin wird deutlich, das die erfindungsgemäßen Beispiele 2, 4, 6, 7, 9, 10 und 11, die mindestens eine Verzweigung im Silikonteil aufweisen, zu offenzelligen Schäumen führen, was ein Indikator für ein breites Verarbeitungsspiel ist.

Zur Überprüfung des Verarbeitungsspiels wurden die Einsatzmenge des Stabilisators und die Menge an eingesetztem Zinnkatalysator (Kosmos®29) in folgender Polyurethanschaum-Formulierung variiert.

| | |
|---|---|
| 100 Teile | eines Polyols der OHZ 47 |
| 4,1 Teile | Wasser |
| 0,2 Teile | DMEA |
| 0,14 bis 0,24 Teile | Zinn-Katalysator |
| 2,5 Teile | eines physikalischen Treibmittels (Dichlormethan) |
| 0,8 bis 1,1 Teile | Schaumstabilisator und Toluylendiisocyanat Index 112,5 (TDI 80/20) von Bayer Material Science AG. |

**Tabelle 5:**

| Stabilisator | Teile | Rückfall [cm] | Raumgewicht [kg/m³] | Porosität [mm Wassersäule] |
|---|---|---|---|---|
| Tegostab BF 2270 | 1,1 | 0,0 | 22,20 | 58 |
| | 0,8 | -0,1 | 22,65 | 35 |
| | 0,6 | -0,8 | 23,55 | 18 |
| Beispiel 2 | 1,1 | -0,4 | 23,25 | 15 |
| | 0,8 | -0,7 | 23,50 | 13 |
| | 0,6 | -1,4 | 23,65 | 9 |

**Tabelle 6:**

| Stabilisator 1,0 Teile | Teile Zn-Kat | Rückfall [cm] | Raumgewicht [kg/m³] | Porosität [mm Wassersäule] |
|---|---|---|---|---|
| Tegostab BF 2270 | 0,14 | 0,0 | 22,55 | 22 |
| | 0,16 | 0,0 | 22,35 | 36 |
| | 0,20 | +0,4 | 23,25 | 78 |
| | 0,24 | 0,0 | 21,60 | 172 |
| Beispiel 2 | 0,14 | -0,7 | 23,35 | 12 |
| | 0,16 | -0,6 | 23,10 | 16 |
| | 0,20 | 0,0 | 22,90 | 29 |
| | 0,24 | 0,0 | 22,20 | 74 |

Aus den Ergebnissen in Tabelle 5 und 6 wird deutlich, dass das erfindungsgemäße Beispiel 2 ein im Vergleich zu einem etablierten Schaumstabilisator leicht verbessertes Verarbeitungsspiel aufweist, da die Offenzelligkeit über einen breiten Dosagebereich gewährleistet ist, ohne dass die Schaumausbeute und die Schaumqualität negativ beeinflusst werden.

## Patentansprüche

1. Silikonpolyetherblock-Copolymere hergestellt durch Organomodifizierung von verzweigten Polysiloxanen mit endständigen und/oder seitenständigen SiH-Funktionen, oder linearen Polysiloxanen mit seitenständigen und/oder endständigen SiH-Funktionen mit Polyethern bzw. Polyethergemischen, **dadurch gekennzeichnet, dass** die verwendeten Allylpolyether eine Polydispersität M_{w}/Mₙ zwischen 1,0 und 1,5 aufweisen und deren Quotienten Mₙ/MG_{JZ} und M_{w}/MG_{JZ} im Bereich von 0,7 bis 1,3 liegen, wobei die Masse MG_{JZ} über die Iodzahl gemäß der Beschreibung bestimmt wird.

2. Silikonpolyetherblock-Copolymere nach Anspruch 1, **dadurch gekennzeichnet, dass** das Polysiloxan nach Organomodifizierung ein Silikonpolyether-Copolymeren gemäß Formel (I) 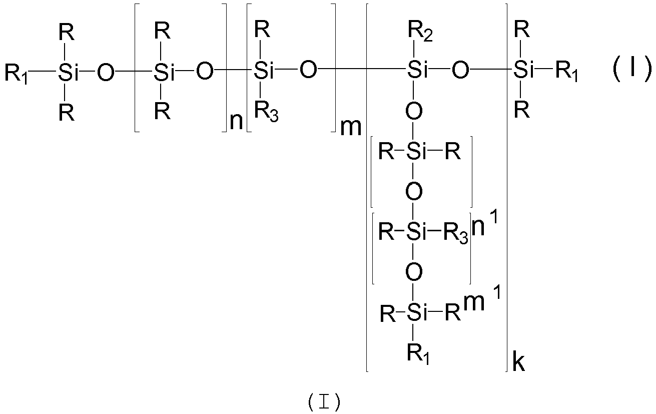 worin
n und n¹ unabhängig voneinander 0 bis 500 sind und (n+n¹) < 500,
m und m¹ unabhängig voneinander 0 bis 60 sind und (m+m¹) < 60 ist,
k 0 bis 50 ist,
R mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise ein Methylrest ist, wobei besonders bevorzugt alle Reste R Methylreste sind,
R₁ R oder R₃ ist,
R₂ R oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
R₃ R und/oder
CH₂-CH₂-CH₂-O-(CH₂-CH₂O-)ₓ-(CH₂-CH(R')O-)_{y}-(SO)_{z}-R",
CH₂-CH₂-O-(CH₂-CH₂O-)ₓ-(CH₂-CH(R')O-)_{y}-R",
CH₂-R^{IV},
CH₂-CH₂-(O)ₓ'-R^{IV},
CH₂-CH₂-CH₂-O-CH₂-CH(OH)-CH₂OH, 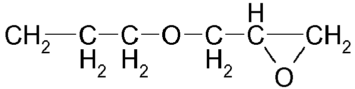
CH₂-CH₂-CH₂-O-CH₂-C(CH₂OH)₂-CH₂-CH₃
ist, worin
x = 0 bis 100,
x' = 0 oder 1,
y = 0 bis 100,
z = 0 bis 100,
R' eine gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen ist und
R" einen Wasserstoffrest oder eine Alkylgruppe mit 1 bis 4 C-Atomen, eine Gruppe -C(O)-R''' mit R''' = Alkylrest, eine Gruppe -CH₂-O-R', eine Alkylarylgruppe, wie z. B. eine Benzylgruppe, die Gruppe -C(O)NH-R' bedeutet,
R^{IV} ein gegebenenfalls substituierter, gegebenenfalls mit Halogenen substituierter Kohlenwasserstoffrest mit 1 bis 50 Kohlenstoffatomen ist,
SO ein Styroloxid-Rest -CH(C₆H₅)-CH₂-O-ist,
mit der Maßgabe, dass mindestens ein Substituent aus R₁, R₂ und R₃ nicht R ist und dass mindestens ein Substituent aus R₁, R₂ und R₃ ein Polyether mit einer Polydispersität M_{w}/Mₙ im Bereich von 1,0 bis 1,5 ist und deren Quotienten Mₙ/MG_{JZ} und M_{w}/MG_{JZ} im Bereich von 0,7 bis 1,3 liegt.

3. Silikonpolyether-Copolymere oder deren Mischungen nach Anspruch 2 gemäß Formel (I) in denen k > 0 und R₁ ungleich R ist.

4. Zusammensetzungen oder Mischungen der Silikonpolyether-Copolymeren nach zumindest einem der Ansprüche 1 bis 3 untereinander und Mischungen der erfindungsgemäßen Silikonpolyetherblock-Copolymeren mit weiteren Additiven, wie Nukleierungsmitteln, zellverfeinernden Additiven, Zellöffnern, Vernetzern, Emulgatoren, Flammschutzmitteln, Antioxidantien, Antistatika, Bioziden, Farbpasten, festen Füllstoffen und/oder Aminkatalysatoren, Metallkatalysatoren und/oder Puffersubstanzen.

5. Zusammensetzungen enthaltend ein oder mehrere Silikonpolyetherblock-Copolymere gemäß zumindest einem der Ansprüche 1 bis 4 sowie weiteren Additiven, wie beispielsweise Nukleierungsmitteln, das sind zellverfeinernde Additive, Zellöffnern, Vernetzern, Emulgatoren, Aminkatalysatoren, Metallkatalysatoren, Puffersubstanzen, Flammschutzmitteln, Antioxidantien, Antistatika, Bioziden, Farbpasten und/oder festen Füllstoffen zur Polyurethanschaumstabilisierung.

6. Zusammensetzungen enthaltend Silikonpolyether-Copolymere nach zumindest einem der Ansprüche 4 oder 5 und Lösungsmitteln, wie beispielsweise Glykolen, Alkoxylaten, Carbonaten, Ethern, Estern, verzweigten und linearen aliphatischen und aromatischen Kohlenwasserstoffen oder Ölen synthetischer und/oder natürlicher Herkunft..

7. Verwendung der Silikonpolyetherblock-Copolymere nach Anspruch 1 bis 6 als Polyurethan-Schaumstabilisator.

8. Verwendung der Silikonpolyetherblock-Copolymeren gemäß zumindest einem der Ansprüche 1 bis 7 zur Herstellung von Polyurethanschaum in Kombination mit Wasser, Methylenchlorid, Pentan, Alkanen, halogenierten Alkanen, Aceton oder Kohlendioxid als Treibmittel.

9. Polyurethanschaum stabilisiert unter Verwendung eines Silikonpolyetherblock-Copolymeren gemäß zumindest einem der Ansprüche 1 bis 6.

10. Polymerartikel bestehend aus einem Polyurethanschaum gemäß Anspruch 9.

11. Polymerartikel enthaltend einen Polyurethanschaum gemäß Anspruch 9.

## Claims

1. Silicone-polyether block copolymers prepared by organomodification of branched polysiloxanes having terminal and/or lateral SiH functions or linear polysiloxanes having lateral and/or terminal SiH functions by means of polyethers or polyether mixtures, **characterized in that** the ally polyethers used have a polydispersity M_{w}/Mₙ in the range from 1.0 to 1.5 and their ratios Mₙ/MW_{IN} and M_{w}/MW_{IN} are in the range from 0.7 to 1.3, wherein the mass MW_{IN} is determined via the iodine number according to the description.

2. Silicone-polyether block copolymers according to Claim 1, **characterized in that** the polysiloxane after organomodification is a silicone-polyether copolymer of the formula (I) 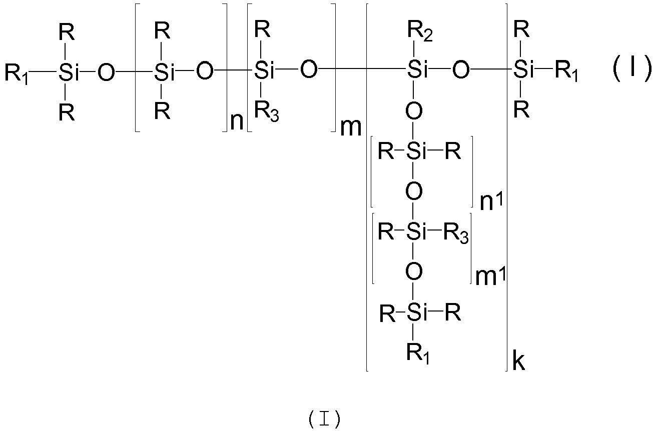 where
n and n¹ are each, independently of one another, from 0 to 500 and (n+n¹) is < 500,
m and m¹ are each, independently of one another, from 0 to 60 and (m+m¹) is < 60,
k is from 0 to 50,
R is at least one radical from the group consisting of linear, cyclic or branched, aliphatic or aromatic, saturated or unsaturated hydrocarbon radicals having from 1 to 20 carbon atoms, preferably a methyl radical, with particular preference being given to all radicals R being methyl radicals,
R₁ is R or R₃,
R₂ is R or a heteroatom-substituted, functional, organic, saturated or unsaturated radical, preferably a radical selected from the group consisting of alkyl, chloroalkyl, chloroaryl, fluoroalkyl, cyanoalkyl, acryloxyaryl, acryloxyalkyl, methacryloxyalkyl, methacryloxypropyl and vinyl radicals, particularly preferably a methyl, chloropropyl, vinyl or methacryloxypropyl radical,
R₃ is R and/or
CH₂-CH₂-CH₂-O-(CH₂-CH₂O-)ₓ-(CH₂-CH(R')O-)_{y}-(SO)_{z}-R",
CH₂-CH₂-O-(CH₂-CH₂O-)ₓ-(CH₂-CH(R')O-)_{y}-R",
CH₂-R^{IV},
CH₂-CH₂-(O)ₓ'-R^{IV},
CH₂-CH₂-CH₂-O-CH₂-CH(OH)-CH₂OH, 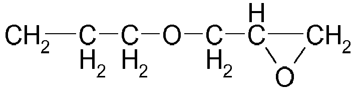
CH₂-CH₂-CH₂-O-CH₂-C(CH₂OH)₂-CH₂-CH₃
where
x = 0 to 100,
x' = 0 or 1,
y = 0 to 100,
z = 0 to 100,
R'is an alkyl or aryl group which has from 1 to 12 carbon atoms and is unsubstituted or substituted, for example by alkyl radicals, aryl radicals or haloalkyl or haloaryl radicals, and
R" is a hydrogen radical or an alkyl group having from 1 to 4 carbon atoms, a -C(O)-R''' group where R'''= alkyl radical, a-CH₂-O-R' group, an alkylaryl group, e.g. a benzyl group, the -C(O)NH-R' group,
R^{IV} is a hydrocarbon radical which has from 1 to 50 carbon atoms and is unsubstituted or substituted, e.g. by halogens,
SO is a styrene oxide radical -CH(C₆H₅)-CH₂-O-, with the proviso that at least one substituent from among R₁, R₂ and R₃ is not R and that at least one substituent from among R₁, R₂ and R₃ is a polyether which has a polydispersity M_{w}/Mₙ in the range from 1.0 to 1.5 and/or ratios Mₙ/MW_{IN} and M_{w}/MW_{IN} in the range from 0.7 to 1.3.

3. Silicone-polyether copolymers or mixtures thereof according to Claim 2 having the formula (I) in which k is > 0 and R₁ is different from R.

4. Compositions or mixtures of the silicone-polyether copolymers according to at least one of Claims 1 to 3 with one another and mixtures of the silicone-polyether block copolymers according to the invention with further additives such as nucleating agents, cell-refining additives, cell openers, crosslinkers, emulsifiers, flame retardants, antioxidants, antistatics, biocides, colour pastes, solid fillers and/or amine catalysts, metal catalysts and/or buffer substances.

5. Compositions containing one or more silicone-polyether block copolymers according to at least one of Claims 1 to 4 and also further additives such as nucleating agents, i.e. cell-refining additives, cell openers, crosslinkers, emulsifiers, amine catalysts, metal catalysts, buffer substances, flame retardants, antioxidants, antistatics, biocides, colour pastes and/or solid fillers for stabilizing polyurethane foams.

6. Compositions containing silicone-polyether copolymers according to at least one of Claims 4 and 5 and solvents such as glycols, alkoxylates, carbonates, ethers, esters, branched and linear aliphatic and aromatic hydrocarbons or oils of synthetic and/or natural origin.

7. Use of the silicone-polyether block copolymers according to any of Claims 1 to 6 as polyurethane foam stabilizer.

8. Use of the silicone-polyether block copolymers according to at least one of Claims 1 to 7 for producing polyurethane foam in combination with water, methylene chloride, pentane, alkanes, halogenated alkanes, acetone or carbon dioxide as blowing agents.

9. Polyurethane foam stabilized using a silicone-polyether block copolymer according to at least one of Claims 1 to 6.

10. Polymer article consisting of a polyurethane foam according to Claim 9.

11. Polymer article containing a polyurethane foam according to Claim 9.

## Revendications

1. Copolymères séquencés de silicone-polyéther fabriqués par organo-modification de polysiloxanes ramifiés contenant des fonctions SiH terminales et/ou latérales ou de polysiloxanes linéaires contenant des fonctions SiH latérales et/ou terminales avec des polyéthers ou des mélanges de polyéthers, **caractérisé en ce que** les polyéthers allyliques utilisés présentent une polydispersité M_{w}/Mₙ comprise entre 1,0 et 1,5, et leurs quotients Mₙ/MG_{JZ} et M_{w}/MG_{JZ} se situent dans la plage allant de 0,7 à 1,3, la masse MG_{JZ} étant déterminée par le biais de l'indice d'iode selon la description.

2. Copolymères séquencés de silicone-polyéther selon la revendication 1, **caractérisés en ce que** le polysiloxane est après l'organo-modification un copolymère de silicone-polyéther selon la formule (I) 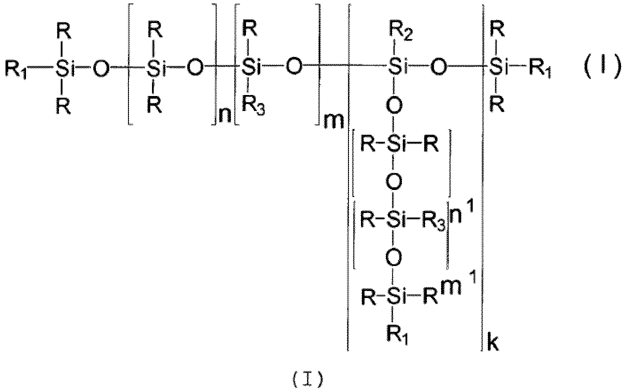 dans laquelle
n et n¹ représentent indépendamment l'un de l'autre 0 à 500, et (n+n¹) < 500,
m et m¹ représentent indépendamment l'un de l'autre 0 à 60, et (m+m¹) < 60,
k représente 0 à 50,
R représente au moins un radical du groupe des radicaux hydrocarbonés linéaires, cycliques ou ramifiés, aliphatiques ou aromatiques, saturés ou insaturés, de 1 à 20 atomes C, de préférence un radical méthyle, tous les radicaux R étant de manière particulièrement préférée des radicaux méthyle,
R₁ représente R ou R₃,
R₂ représente R ou un radical fonctionnel, organique, saturé ou insaturé, substitué avec des hétéroatomes, de préférence choisi dans le groupe constitué par les radicaux alkyle, chloroalkyle, chloroaryle, fluoroalkyle, cyanoalkyle, acryloxyaryle, acryloxyalkyle, méthacryloxyalkyle, méthacryloxypropyle ou vinyle, de manière particulièrement préférée un radical méthyle, chloropropyle, vinyle ou méthacryloxypropyle,
R₃ représente R et/ou CH₂-CH₂-CH₂-O- (CH₂-CH₂O-)ₓ-(CH₂-C_{H}(R')O-)_{y}-(SO)_{z}-R",
CH₂-CH₂-O-(CH₂-CH₂O-)ₓ-(CH₂-CH(R')O-)_{y}-R",
CH₂-R^{Iv},
CH₂-CH₂-(O)ₓ'-R^{IV},
CH₂-CH₂-CH₂-O-CH₂-CH(OH)-CH₂OH, 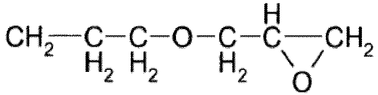
CH₂-CH₂-CH₂-O-CH₂-C(CH₂OH)₂-CH₂-CH₃,
avec
x = 0 à 100,
x' = 0 ou 1,
y = 0 à 100,
z = 0 à 100,
R' signifie un groupe alkyle ou aryle de 1 à 12 atomes C, éventuellement substitué, par exemple substitué avec des radicaux alkyle, des radicaux aryle ou des radicaux halogénoalkyle ou halogénoaryle, et
R" signifie un radical hydrogène ou un groupe alkyle de 1 à 4 atomes C, un groupe -C(O)-R''' avec R''' = un radical alkyle, un groupe CH₂-O-R', un groupe alkylaryle, tel que p. ex. un groupe benzyle, le groupe -C(O)NH-R',
R^{IV} signifie un radical hydrocarboné éventuellement substitué, éventuellement substitué avec des halogènes, de 1 à 50 atomes de carbone,
SO signifie un radical oxyde de styrène -CH(C₆H₅)-CH₂-O-,
à condition qu'au moins un substituant parmi R₁, R₂ et R₃ ne représente pas R, et qu'au moins un substituant parmi R₁, R₂ et R₃ soit un polyéther ayant une polydispersité M_{w}/Mₙ dans la plage allant de 1,0 à 1,5 et dont les quotients Mₙ/MG_{JZ} et M_{w}/MG_{JZ} se situent dans la plage allant de 0,7 à 1,3.

3. Copolymères de silicone-polyéther ou leurs mélanges selon la revendication 2 de formule (I) dans laquelle k > 0 et R₁ différent de R.

4. Compositions ou mélanges des copolymères de silicone-polyéther selon au moins l'une quelconque des revendications 1 à 3 les uns avec les autres et mélanges des copolymères séquencés de silicone-polyéther selon l'invention avec d'autres additifs, tels que des agents de nucléation, des additifs affinant les cellules, des agents d'ouverture cellulaire, des agents de réticulation, des émulsifiants, des agents ignifuges, des antioxydants, des antistatiques, des biocides, des pâtes colorantes, des charges solides et/ou des catalyseurs aminés, des catalyseurs métalliques et/ou des substances tampons.

5. Compositions contenant un ou plusieurs copolymères séquencés de silicone-polyéther selon au moins l'une quelconque des revendications 1 à 4, ainsi que d'autres additifs, tels que par exemple des agents de nucléation, des additifs affinant les cellules, des agents d'ouverture cellulaire, des agents de réticulation, des émulsifiants, des catalyseurs aminés, des catalyseurs métalliques, des substances tampons, des agents ignifuges, des antioxydants, des antistatiques, des biocides, des pâtes colorantes et/ou des charges solides pour la stabilisation de mousses de polyuréthane.

6. Compositions contenant des copolymères de silicone-polyéther selon au moins l'une quelconque des revendications 4 ou 5 et des solvants, tels que par exemple des glycols, des alcoxylates, des carbonates, des éthers, des esters, des hydrocarbures ramifiés et linéaires, aliphatiques et aromatiques, ou des huiles d'origine synthétique et/ou naturelle.

7. Utilisation des copolymères séquencés de silicone-polyéther selon les revendications 1 à 6 en tant que stabilisateur de mousse de polyuréthane.

8. Utilisation des copolymères séquencés de silicone-polyéther selon au moins l'une quelconque des revendications 1 à 7 pour la fabrication d'une mousse de polyuréthane en combinaison avec de l'eau, du chlorure de méthylène, du pentane, des alcanes, des alcanes halogénés, de l'acétone ou du dioxyde de carbone en tant qu'agent gonflant.

9. Mousse de polyuréthane stabilisée en utilisant un copolymère séquencé de silicone-polyéther selon au moins l'une quelconque des revendications 1 à 6.

10. Article polymère constitué par une mousse de polyuréthane selon la revendication 9.

11. Article polymère contenant une mousse de polyuréthane selon la revendication 9.
